# EUROPEAN PATENT APPLICATION

(11) **EP 4 474 951 A1**
(43) Date of publication of application: **11.12.2024**
(21) Application number: 23749516.3
(22) Date of filing: 17.01.2023
(51) Int. Cl.: G06F 3/00

(54) **COMMUNICATION SYSTEM, INFORMATION PROCESSING METHOD, COMPUTER PROGRAM, AND INFORMATION PROCESSING DEVICE**

(30) Priority: 02.02.2022 JP 2022014880
(71) Applicant: EIZO Corporation, Ishikawa 924-8566 (JP)
(72) Inventor: NAKADOZONO, Takayuki, Hakusan-shi, Ishikawa 924-8566 (JP); KATO, Haruo, Hakusan-shi Ishikawa 924-8566 (JP); KAWAKITA, Shinya, Hakusan-shi, Ishikawa 924-8566 (JP); HOSOMICHI, Shogo, Hakusan-shi, Ishikawa 924-8566 (JP); KABUTA, Iukei, Hakusan-shi, Ishikawa 924-8566 (JP)
(74) Representative: McKinnon, Alistair James
(86) International application number: PCT/JP2023/001220
(87) International publication number: WO 2023/149200

(57) **Abstract**

To prevent impairment of convenience.

A communication system described below is provided. Port data is data specifying a receiving port or a transmitting port. The receiving port is a port that receives data in a predetermined format in second communication, and the transmitting port is a port that transmits the data in the predetermined format in the second communication. In first communication, one of first and second control units acquires the port data of the other of the first and second control units. The second communication is performed after the first communication, and the data in the predetermined format is transmitted and received between first and second connector units in the second communication. The one of the first and second control units is configured to determine whether the port data of the one control unit is different from the acquired port data of the other control unit.

## Description

### TECHNICAL FIELD

The present invention relates to a communication system, information processing method, computer program, and information processing device.

### BACKGROUND ART

Patent Literature 1 discloses a communication system in which multiple information processing devices (monitors) are connected through connectors (terminals). This communication system is configured such that by transmitting an image (image data) displayed on one monitor to another monitor, the same image can be displayed on the other monitor.

### Citation List

### Patent Literature

[Patent Literature 1] Japanese Unexamined Patent Application Publication No. 2017-111251

### SUMMARY OF INVENTION

### Technical Problem

In the above communication system in which the information processing devices are connected to each other, whether the connector of each information processing device is allowed to function as a transmitting connector or a receiving connector may be previously set. However, if the connectors having the same function setting are connected to each other, that is, a wrong connection is made, the information processing devices may not be able to properly communicate with each other. A user does not necessarily immediately become aware of such a situation where the connection is wrong. That is, the above communication system has a problem that its convenience may be impaired.

The present invention has been made in view of the foregoing, and an object thereof is to prevent impairment of convenience.

### Solution to Problem

One aspect of the present invention provides a communication system including first and second information processing devices. The first information processing device includes a first connector unit and a first control unit. The second information processing device includes a second connector unit and a second control unit. The first and second connector units are configured to be able to connect the first and second control units so that the first and second control units communicate with each other. The first and second control units are configured to be able to perform first communication and second communication and each contain port data. The port data is data specifying either a receiving port or a transmitting port. The receiving port is a port that receives data in a predetermined format in the second communication. The transmitting port is a port that transmits the data in the predetermined format in the second communication. One of the first and second control units acquires the port data of the other of the first and second control units in the first communication. The second communication is performed after the first communication, and the data in the predetermined format is transmitted and received between the first and second connector units in the second communication. The one of the first and second control units is configured to determine whether the port data of the one control unit is different from the acquired port data of the other control unit.

According to the present invention, the one of the first and second control units is configured to determine whether the port data of the one control unit is different from the acquired port data of the other control unit. Thus, even when the connection is wrong, the present invention is able to allow the first and second control units to properly perform the various operations and to prevent impairment of convenience.

Various embodiments of the present invention are described below. The embodiments below can be combined with each other.

Preferably, in the communication system, the one of the first and second control units is configured to, when the one control unit determines that the port data of the one control unit is identical to the acquired port data of the other control unit, make a notification that connection is wrong.

Preferably, in the communication system, the information processing device corresponding to the one of the first and second control units is a display including a display unit.

Preferably, in the communication system, the one of the first and second control units acquires the port data of the other of the first and second control units using a vendor-defined message (VDM) in the first communication.

Preferably, in the communication system, the first and second control units are configured to perform an initial state determination operation on the basis of a voltage between the first and second connector units, the initial state determination operation is performed before the first communication, a determination that allows one of the information processing devices to function as a source and allows the other information processing device to function as a sink is made in the initial state determination operation, the source corresponds to a device that supplies power, and the sink corresponds to a device that receives supply of power.

Preferably, in the communication system, at least one of the first and second information processing devices is configured to be switchable between the source and the sink, and when the first and second connector units are connected and the amount of change in the voltage between the first and second connector units is smaller than a predetermined threshold, the one of the first and second information processing devices is switched from the source to the sink or from the sink to the source.

Another aspect of the present invention provides an information processing method for determining whether connection between first and second information processing devices is wrong. The method includes an acquisition step and a determination step. The first information processing device includes a first connector unit and a first control unit. The second information processing device includes a second connector unit and a second control unit. The first and second connector units are configured to be able to connect the first and second control units so that the first and second control units communicate with each other. The first and second control units are configured to be able to perform first communication and second communication and each contain port data. The port data is data specifying either a receiving port or a transmitting port. The receiving port is a port that receives data in a predetermined format in the second communication. The transmitting port is a port that transmits the data in the predetermined format in the second communication. In the first communication, one of the first and second control units acquires the port data of the other of the first and second control units. The second communication is performed after the first communication, and the data in the predetermined format is transmitted and received between the first and second connector units in the second communication. In the acquisition step, the one of the first and second control units acquires the port data of the other of the first and second control units by performing the first communication. In the determination step, the one of the first and second control units determines whether the port data of the one control unit is different from the acquired port data of the other control unit.

Still another aspect of the present invention provides a computer program for performing an information processing method for determining whether connection between first and second information processing devices is wrong. The method includes an acquisition step and a determination step. The first information processing device includes a first connector unit and a first control unit. The second information processing device includes a second connector unit and a second control unit. The first and second connector units are configured to be able to connect the first and second control units so that the first and second control units communicate with each other. The first and second control units are configured to be able to perform first communication and second communication and each contain port data. The port data is data specifying either a receiving port or a transmitting port. The receiving port is a port that receives data in a predetermined format in the second communication. The transmitting port is a port that transmits the data in the predetermined format in the second communication. In the first communication, one of the first and second control units acquires the port data of the other of the first and second control units. The second communication is performed after the first communication, and the data in the predetermined format is transmitted and received between the first and second connector units in the second communication. In the acquisition step, the one of the first and second control units acquires the port data of the other of the first and second control units by performing the first communication. In the determination step, the one of the first and second control units determines whether the port data of the one control unit is different from the acquired port data of the other control unit.

Yet another aspect of the present invention provides an information processing device including a connector unit and a control unit. The connector unit is configured to be connectable to an external connector unit of an external device independent of the information processing device. The control unit is able to communicate with an external control unit of the external device through the connector unit and is configured to be able to perform first communication and second communication. The control unit and the external control unit each contain port data related to the connector unit or the external connector unit. The port data is data specifying either a receiving port or a transmitting port. The receiving port is a port that receives data in a predetermined format in the second communication. The transmitting port is a port that transmits the data in the predetermined format in the second communication. In the first communication, the control unit acquires the port data of the external control unit. The second communication is performed after the first communication, and the data in the predetermined format is transmitted and received between the connector unit and the external connector unit in the second communication. The control unit is configured to determine whether the port data of the control unit is different from the acquired port data of the external control unit.

Preferably, in the information processing device, when the control unit determines that the port data of the control unit is identical to the acquired port data of the external control unit, in the first communication, the connector unit of the control unit operates to become a function corresponding to the port opposite to the port specified by the port data of the external control unit.

### BRIEF DESCRIPTION OF DRAWINGS

FIG. 1 is a block diagram showing a schematic configuration of a communication system 100 according to a first embodiment.
FIG. 2 is a functional block diagram of information processing devices 1, 2 shown in FIG. 1. In FIG. 2, a connection unit 3 is correctly connected to the information processing devices 1, 2.
FIG. 3 schematically shows the configuration of the connection unit 3.
FIG. 4 shows a state in which the information processing devices 1, 2 shown in FIG. 2 are wrongly connected through the connection unit 3.
FIG. 5 shows a modification 1 of the information processing devices 1, 2 according to the first embodiment.
FIG. 6 is a functional block diagram of a modification 2 of the communication system 100 according to the first embodiment.
FIG. 7 is a functional block diagram of a communication system 100 according to a second embodiment.

### DESCRIPTION OF EMBODIMENTS

Now, embodiments of the present invention will be described with reference to the drawings. Various features described in the embodiments below can be combined with each other. However, each feature independently establishes the present invention.

### 1 First Embodiment

### 1-1 Schematic Configuration of Communication System 100

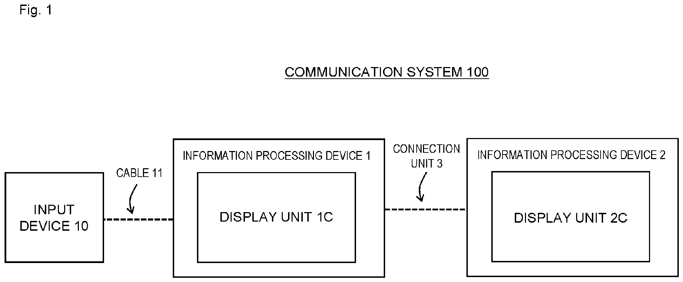

As shown in FIG. 1, a communication system 100 according to a first embodiment includes an information processing device 1, an information processing device 2 independent of the information processing device 1, a connection unit 3, an input device 10, and a cable 11.

The information processing device 1 includes a processing unit 1A, a controller 1B, and a display unit 1C. The information processing device 2 includes a processing unit 2A, a controller 2B, and a display unit 2C.

The information processing device 1 is connected to the input device 10 through the cable 11 and is able to acquire various types of data (for example, image data, voice data, and the like) from the input device 10. While, in the first embodiment, the input device 10 is described as being connected to the information processing device 1, this is not limiting and the input device 10 may be connected to the information processing device 2.

The input device 10 shown in FIG. 1 is an information processing device (for example, a personal computer) and is configured to be able to output various types of data such as image data. The cable 11 consists of, for example, an HDMI^{®} cable or DisplayPort^{®} (DP) cable and transmits various types of data of the input device 10 to the information processing device 1.

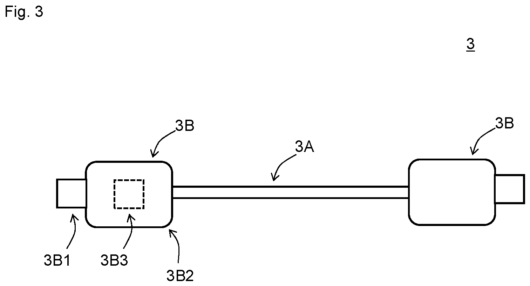

As shown in FIG. 3, the connection unit 3 includes a cable 3A and a pair of connector units 3B. The cable 3A contains multiple lines. In the first embodiment, connector units 1B2, 2B2 of the information processing device 1, 2 consist of USB Type-C standard connectors, and the connector units 3B of the connection unit 3 also consist of USB Type-C standard connectors. The connector units 3B each include a connector 3B1 and a plug unit 3B2, and the plug unit 3B2 contains a control circuit 3B3 (E-maker). In the first embodiment, one of the plug units 3B2 contains the control circuit 3B3.

The lines contained in the cable 3A include a power supply line (VBUS), a ground line (GND), various types of signal lines, and a power supply line connected to the control circuit 3B3 and the like. The various types of signal lines include a high-speed line, a low-speed line, a communication line (configuration channel line), and a USB2.0 line. The communication line (configuration channel line) is used, for example, in an initial state determination operation or negotiation operation (an example of the first communication) (to be discussed later).

The processing unit 1A includes an acquisition unit 1A1, a determination unit 1A2, a notification unit 1A3, and an output unit 1A4. The controller 1B includes a control circuit unit 1B1 and a connector unit 1B2.

The processing unit 2A includes an acquisition unit 2A1, a determination unit 2A2, a notification unit 2A3, and an output unit 2A4. The controller 2B includes a control circuit unit 2B1 and a connector unit 2B2.

The above components may be implemented by software or hardware. In the case of software, the components are implemented by execution of a computer program by a CPU. The program may be stored in a built-in storage unit or a computer-readable, non-transitory storage medium. The program stored in an external storage unit may be read and executed by so-called "cloud computing." In the case of hardware, the components may be implemented by various types of circuits, such as ASIC, FPGA, and DRP. In the present embodiment, various types of information and concepts encompassing the information are handled, and these are represented by the magnitude of a signal value as a binary bit set consisting of 0 or 1. Communication or calculation is performed in accordance with the aspect of the above software or hardware.

### 1-2 Detailed Configuration of Information Processing Devices 1, 2

### 1-2-1 Basic Configuration

As shown in FIG. 1, in the first embodiment, the information processing devices 1, 2 are displays and include display units 1C and 2C, respectively. Also, in the first embodiment, the information processing devices 1, 2 have similar functions. For example, the processing unit 1A has functions similar to those of the processing unit 2A, the controller 1B has functions similar to those of the controller 2B, and the display unit 1C has functions similar to those of the display unit 2C.

One of the information processing devices 1, 2 is an example of the first information processing device, and the other information processing device is an example of the second information processing device. One of the connector units 1B2, 2B2 is the first connector unit, and the other connector unit is the second connector unit.

Also, one of the information processing devices 1, 2 is an example of the information processing device, and the other information processing device is an example of the external device. In this case, the connector unit of the other of the information processing devices 1, 2 is an example of the external connector unit, and the processing unit and control circuit unit of the other information processing device is an example of the external control unit.

### 1-2-1-1 USB Type-C and USB Power Delivery

The information processing device 1 is communicatively connected to the information processing device 2 through the connection unit 3. In the first embodiment, the connector units 1B2, 2B2 of the information processing device 1, 2 consist of USB Type-C standard connectors. Also, in the first embodiment, the information processing devices 1, 2 are configured such that one of the information processing devices 1, 2 can supply power to the other information processing device through the connector units 1B2, 2B2. The information processing devices 1, 2 support a USB power delivery (USB PD) standard.

While, in the first embodiment, the connector units 1B2, 2B2 are described as being USB Type-C connectors, this is not limiting and the connector units 1B2, 2B2 may consist of, for example, connectors having functions equivalent to those of USB Type-C connectors.

While the information processing apparatuses 1, 2 are described as supporting a USB power delivery (USB PD) standard, this is not limiting and the information processing devices 1, 2 may be those that do not support a USB PD standard. In other words, the information processing apparatuses 1, 2 may be those without a function of supplying power from one of them to the other.

### 1-2-1-2 Port Data

One of the information processing devices 1, 2 acquires the port data of the other information processing device. The one information processing device has a function of determining whether the connection between the information processing device 1 and information processing device 2 is correct or wrong, on the basis of the acquired port data and the port data of the one information processing device.

Each port data specifies each of the connectors (IN connector and OUT connector) of the connector unit 1B2 or 2B2 as a connector that receives data in a predetermined format or a connector that transmits the data in the predetermined format.

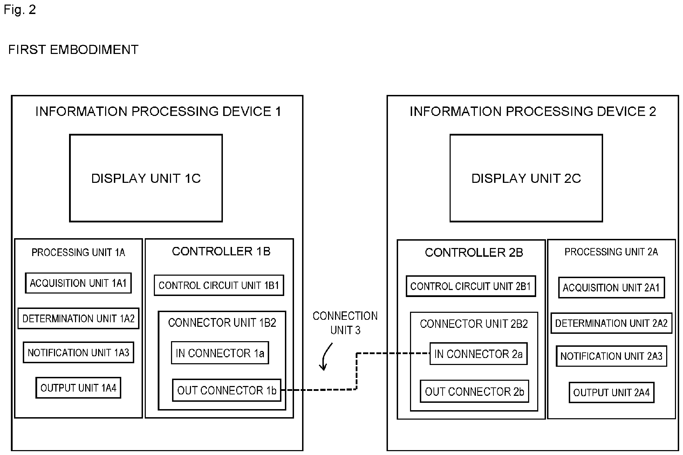

The data in the predetermined format is, for example, image data or voice data acquired by the information processing device 1 from the input device 10. When the information processing devices 1, 2 is placed in a connection state shown in FIG. 2 (correct connection state), the data in the predetermined format is transmitted from the information processing device 1 to the information processing device 2.

Also, each port data specifies a receiving port or a transmitting port. The receiving port is a port that receives the data in the predetermined format in output operation (to be discussed later). The transmitting port is a port that transmits the data in the predetermined format in the output operation. For example, a connector of the receiving-port and the port data stored in each of the information processing devices 1, 2 are pre-specified (set) to either a receiving port or transmitting port.

### 1-2-2 Detailed Configuration of Processing Unit and Controller

The processing unit 1A and controller 1B have the same functions as those of the processing unit 2A and controller 2B. For this reason, the configuration of the information processing device 1 (processing unit 1A and controller 1B) will be mainly described below, and description of the information processing device 2 will be basically omitted.

One of the processing unit 1A and control circuit unit 1B1 and the processing unit 2A and control circuit unit 2B1 is an example of the first control unit, and the other is an example of the second control unit.

### 1-2-2-1 Processing Unit 1A

As shown in FIG. 2, the processing unit 1A is configured to be able to centrally control the entire information processing device 1 and has functional units such as the acquisition unit 1A1, determination unit 1A2, notification unit 1A3, and output unit 1A4 described above.

### <Acquisition Unit 1A1>

The acquisition unit 1A1 is configured to be able to acquire port the data related to the connector unit 2B2 of the information processing device 2 (information processing device different from the information processing device 1) from the information processing device 2. This port data is stored in the control circuit unit 2B1 of the controller 2B.

### <Determination Unit 1A2>

The determination unit 1A2 is configured to determine whether the port data of the control circuit unit 1B1 (the port data previously set with respect to the connector unit 1B2 of the information processing device 1) is different from the port data acquired by the acquisition unit 1A1 (the port data previously set with respect to the connector unit 2B2 of the information processing device 2). In other words, the determination unit 1A2 is configured to determine whether the connection between the connector units 1B2, 2B2 through the connection unit 3 is correct. For example, if the port data of the information processing device 1 specifies a transmitting port and the port data acquired by the acquisition unit 1A1 specifies a receiving port, the determination unit 1A2 determines that the connection is correct. If both the port data of the control circuit unit 1B1 and the port data acquired by the acquisition unit 1A1 specify a transmitting port, the determination unit 1A2 determines that the connection is wrong.

### <Notification Unit 1A3>

The notification unit 1A3 is configured to, when the determination unit 1A2 determines that the port data of the control circuit unit 1B1 is the same as the port data acquired by the acquisition unit 1A1, notify a user that the connection is wrong. Specifically, the notification unit 1A3 is able to notify the user by displaying a message indicating the wrong connection on the display unit 1C. The notification unit 1A3 may notify the user by emitting a voice indicating the wrong connection from a speaker (not shown). The notification unit 1A3 may also notify the user using both display of a message on the display unit 1C and emission of a voice from the speaker.

### <Output Unit 1A4>

The output unit 1A4 is configured to output the image data or the like (the data in the predetermined format) of the input device 10 to the connector unit 1B2. In the first embodiment, the image data or the like is outputted to the information processing device 2 through the high-speed line of the connection unit 3.

### 1-2-2-2 Controller 1B <Control Circuit Unit 1B1>

The control circuit unit 1B1 is configured to be able to communicate with the processing unit 1A. The control circuit unit 1B1 includes, for example, a memory, a circuit for monitoring the communication line (configuration channel line), a circuit for controlling the lines of the cable 3A, and the like.

The control circuit unit 1B1 is storing the port data of itself (information processing device 1). This port data specifies an IN connector 1a as a receiving connector and specifies an OUT connector 1b as a transmitting connector. When the information processing device 2 requests this port data, the port data is transmitted to the information processing device 2 and the determination unit 2A2 makes a comparison between this port data and the port data of the control circuit unit 2B1 (information processing device 2). Note that in the first embodiment, the information processing device 1 requests the port data from the information processing device 2.

The control circuit unit 1B1 detects that the voltage of the communication line has changed and determines whether the connection unit 3 has been connected to the connector units 1B2, 2B2. The control circuit unit 1B1 includes a pull-up/pull-down switch circuit. The pull-up/pull-down switch circuit is electrically connected to the communication line of the connection unit 3 and is configured to be switchable between a pull-up state in which the pull-up/pull-down switch circuit is connected to a predetermined voltage and a pull-down state in which it is connected to the ground. The control circuit unit 1B1 switches between the pull-up state and the pull-down state at predetermined intervals. By switching between the pull-up state and the pull-down state, the voltage of the communication line changes.

When the control circuit unit 1B1 determines that the connection unit 3 has been connected to the connector units 1B2, 2B2, it makes a determination as follows in accordance with the termination state (the pull-up state or pull-down state) of the communication line.

When the termination state is the pull-up state, the control circuit unit 1B1 makes a determination that allows the information processing device 1 to function as a source. Also, when the termination state is the pull-up state, the control circuit unit 1B1 makes a determination that allows the connector (the OUT connector 1b in an example in FIG. 2) to which the connection unit 3 is connected to function as a transmitting connector in an output operation. The source here refers to a device that supplies power through the power supply line of the connection unit 3.

In contrast, when the termination state is the pull-down state, the control circuit unit 1B1 makes a determination that allows the information processing device 1 to function as a sink. Also, when the termination state is the pull-down state, the control circuit unit 1B1 makes a determination that allows the connector (the OUT connector 1b in the example in FIG. 2) to which the connection unit 3 is connected to function as a receiving connector in an output operation. The sink here refers to a device that receives supply of power through the power supply line of the connection unit 3.

As described above, in the first embodiment, the control circuit units 1B1, 2B1 are configured to be able to switch between the pull-up state and the pull-down state and thus are able to switch the information processing devices between the source and sink (dual-roll power). The above configuration of the control circuit units 1B1, 2B1 is not limiting. Preferably, at least one of the control circuit units 1B1, 2B1 is configured to be able to switch between the pull-up state and the pull-down state.

For example, when an attempt is made to connect two information processing devices that function only as a sink, the voltage of the communication line does not change and the connection of the connection unit 3 to such information processing devices is not established. That is, the connection of the connection unit 3 to the information processing devices is not detected. However, when at least one of the control circuit units 1B1, 2B1 is configured to be able to switch between the pull-up state and the pull-down state and is able to switch the information processing devices between a source and a sink, the at least one control circuit unit is able to avoid a failure to establish the connection. When the amount of change in the voltage of the communication line of the connection unit 3 is smaller than a predetermined threshold, the at least one of the control circuit units 1B1, 2B1 preferably switches the source to the sink, or the sink to the source.

The control circuit unit 2B1 has functions similar to those of the control circuit unit 1B1. For this reason, the control circuit unit 2B1 makes a similar determination that allows the information processing device 2 to function as a source or sink. The control circuit unit 2B1 also makes a determination that allows a connector (an IN connector 2a in the example in FIG. 2) to which the connection unit 3 is connected to function as a receiving connector or transmitting connector in an output operation.

Which of the control circuit units 1B1, 2B1 makes a determination that allows the information processing device corresponding to the control circuit unit to function as a source or sink and which of these control circuit units makes a determination that allows the connector corresponding to the control circuit unit to function as a receiving connector or transmitting connector vary depending on the termination state. The termination state varies depending on the timing at which the user connects the connection unit 3 to the information processing devices 1, 2. For this reason, how the initial state is determined is not set previously.

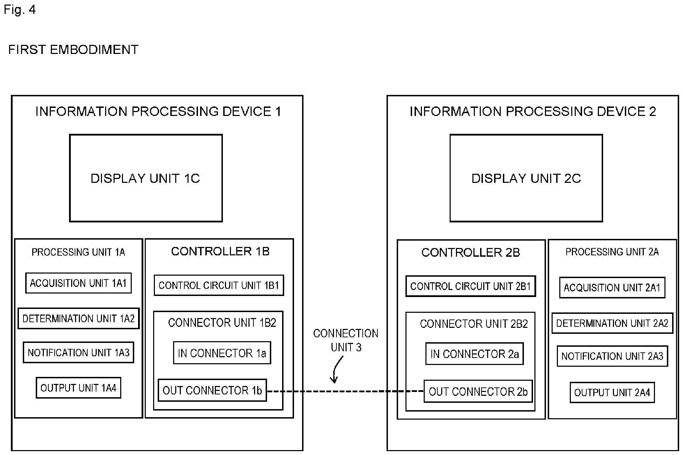

While (1) the control circuit unit 1B1 makes a determination that allows the corresponding connector to function as a transmitting connector or receiving connector in an output operation, (2) the port data stored in the control circuit unit 1B1 specifies the connector as a transmitting connector or receiving connector. The characteristic (1) and characteristic (2) are independent of each other. As a matter of course, the port data specifies the IN connector 1a as a receiving connector and specifies the OUT connector 1b as a transmitting connector. On the other hand, the control circuit unit 1B1 does not necessarily makes a determination that allows the OUT connector 1b to function as a transmitting connector. For example, when the OUT connector 1b and OUT connector 2b that each originally function as a transmitting connector are connected, as shown in FIG. 4, the initial state of both connectors is not set nor is a negotiation operation performed unless the control circuit unit 1B1 makes a determination that allows one of the connectors to function as a receiving connector. For this reason, when the OUT connector 1b and OUT connector 2b are connected, the control circuit unit 1B1 makes a determination that allows one of both connectors to function as a receiving connector. Note that even if such a determination is made, image data or the like is not transmitted or received in an output operation, since the connection between the OUT connector 1b and OUT connector 2b is wrong.

The control circuit unit 1B1 also determines the value of electric current that can be supplied to the information processing device 2 through the power supply line of the connection unit 3. In other words, the control circuit unit 1B1 determines the value of electric current that can be supplied from the source to the sink, on the basis of the voltage of the communication line of the connection unit 3.

### <Connector Unit 1B2>

The connector unit 1B2 includes the IN connector 1a and OUT connector 1b. The IN connector 1a is a connector for receiving image data or the like in an output operation, and the OUT connector 1b is a connector for transmitting image data or the like in an output operation. As seen above, the information processing device 1 includes the connectors having the separate purposes. Thus, the configuration of the information processing device 1 that transmits and receives data to and from the information processing device 2 avoids being complicated or upsized. For example, if the information processing device 1 includes only one connector for both reception and transmission, the information processing device 1 has to be provided with a separate circuit or the like for switching between reception and transmission, resulting in complication and upsizing of the configuration.

### 1-3 Operation of Communication System 100

Referring to FIG. 2, the operation of the communication system 100 will be described. The information processing devices 1, 2 of the communication system 100 are configured to be able to perform an initial state determination operation, a negotiation operation (an example of the first communication), and an output operation (an example of the second communication).

### 1-3-1 Operation when Connection is Correct

### 1-3-1-1 Initial State Determination Operation

An initial state determination operation is an operation in which the initial state of the information processing devices 1, 2 (the initial state of the connector units) is determined, and is performed before a negotiation operation (to be discussed later). The control circuit units 1B1, 2B1 are monitoring the voltage between the connector units 1B2, 2B2. More specifically, the control circuit units 1B1, 2B1 are monitoring the voltage of the communication line (configuration channel line). When the control circuit units 1B1, 2B1 detect that the voltage of the communication line has changed, they determine whether the connection unit 3 has been connected to the connector units 1B2, 2B2. The control circuit units 1B1, 2B1 then determine the initial state of the ports (connector units 1B2, 2B2) corresponding to the control circuit units 1B1, 2B1 on the basis of the termination state (termination voltage) of the communication line of the connection unit 3.

The term "determine the initial state" here refers to making a determination that allows the information processing devices 1, 2 (connector units 1B2, 2B2) to function as a receiving device or transmitting device in an output operation. In the first embodiment, the term "determine the initial state" also includes making a determination that allows the information processing devices 1, 2 to function as a source or sink.

Here, it is assumed that with the connection unit 3 connected to the OUT connector 1b and IN connector 2a as shown in FIG. 2 (correct connection), the control circuit units 1B1, 2B1 make a determination that allows the OUT connector 1b to function as a transmitting connector and a determination that allows the IN connector 2a to function as a receiving connector. These determinations match the original functions of the connectors. Due to the above determinations, the OUT connector 1b is determined as a source, and the IN connector 2a is determined as a sink.

### 1-3-1-2 Negotiation Operation (an example of the first communication)

In a negotiation operation, start-of-packet communication (SOP communication) is performed between the information processing devices 1, 2 or between the information processing device 1 and connection unit 3 using the communication line of the connection unit 3. First, the information processing device 1 drives the control circuit 3B3 of the connection unit 3 by supplying power (voltage Vconn) to the control circuit 3B3 through the power supply line. Then, information of the connection unit 3 is transmitted to the information processing device 1.

Since the determination that allows the OUT connector 1b to function as a transmitting connector has been made, the information processing device 1 and the information processing device 2 perform negotiation (communication) as a host and a device, respectively. Specifically, the control circuit unit 1B1 of the information processing device 1 transmits a message to request data related to the information processing device 2 to the control circuit unit 2B1 of the information processing device 2. For example, a vendor-defined message (VDM) may be used as a message exchanged between the control circuit units 1B1, 2B1. The data related to the information processing device 2 is stored in the control circuit unit 2B1 and includes the ID and the like of the information processing device 2 and the port data. The acquisition unit 1A1 acquires the port data of the information processing device 2 through the control circuit unit 2B1, the communication line of the connection unit 3, and the control circuit unit 1B1 (an example of the acquisition step).

The determination unit 1A2 determines whether the port data of the control circuit unit 1B1 (the port data previously set with respect to the connector unit 1B2 of the information processing device 1) is different from the port data acquired by the acquisition unit 1A1 (the port data previously set with respect to the connector unit 2B2 of the information processing device 2) (an example of the determination step). Referring to FIG. 2, the port data of the control circuit unit 1B1 specifies a transmitting port, and the port data acquired by the acquisition unit 1A1 specifies a receiving port. For this reason, the determination unit 1A2 determines that the former port data is different from the latter port data. In other words, the determination unit 1A2 determines that the connection is correct.

### 1-3-1-3 Output Operation (an example of the second communication)

In an output operation, the communication line and high-speed line of the connection unit 3 are used. The output operation is performed after the negotiation operation. In the output operation, image data or the like (data in a predetermined format) of the input device 10 is transmitted and received between the connector units 1B2, 2B2.

When the connection state of the information processing devices 1, 2 is correct, as shown in FIG. 2, the image data or the like (the data in the predetermined format) of the input device 10 is transmitted from the information processing device 1 and received by the information processing device 2. Note that before transmitting the image data or the like, the information processing device 1 transmits data indicating that the image data will be transmitted, to the information processing device 2 through the communication line so that the data can be properly transmitted and received.

### 1-3-1-4 Other Operations

### <Transmission-Reception Swap Operation>

A determination that allows the OUT connector 1b to function as a receiving connector and a determination that allows the IN connector 2a to function as a transmitting connector may be made in an initial state determination operation. These determinations are opposite to the original functions of the connectors.

For this reason, the determinations are swapped in a negotiation operation. Specifically, the control circuit units 1B1, 2B1 newly make a determination that allows the OUT connector 1b to function as a transmitting connector and a determination that allows the IN connector 2a to function as a receiving connector. Since the determination that allows the OUT con\nector 1b to function as a transmitting connector has been made, the information processing device 1 and the information processing device 2 communicate with each other as a host and a device, respectively, as in the above negotiation operation.

### <Source-Sink Swap Operation>

For example, it is assumed that while a determination that allows one information processing device to function as a source has been made in an initial state determination operation, the information processing device is originally an information processing device that functions as a sink. In this case, the source and sink are swapped in a negotiation operation.

### 1-3-2 Operation when Connection is Wrong

### 1-3-2-1 Initial State Determination Operation

An initial state determination operation when the connection is wrong is the same as that when the connection is correct and therefore will not be described.

### 1-3-2-2 Negotiation Operation (an example of the first communication)

The difference between a negotiation operation when the connection is wrong and that when the connection is correct will be described. When the OUT connector 1b and OUT connector 2b are connected as shown in FIG. 4, the port data of the control circuit unit 1B1 is the same as the port data acquired by the acquisition unit 1A1. For this reason, the determination unit 1A2 determines that the connection is wrong, and the notification unit 1A3 notifies the user that the connection is wrong by displaying a message indicating the wrong connection on the output unit 1A4. Thus, the user can smoothly become aware that the connection is wrong. That is, the communication system 100 has improved convenience.

When the OUT connector 1b and OUT connector 2b are connected as shown in FIG. 4, a determination that allows the OUT connector 1b to function as a receiving connector and a determination that allows the OUT connector 2b to function as a transmitting connector may be made. In this case, in a negotiation operation, the port data of the information processing device 1 is transmitted to the information processing device 2, and the determination unit 2A2 of the information processing device 2 makes a determination related to the port data. In this case, the determination unit 2A2 determines that the connection is wrong and displays a message to that effect on the display unit 2C.

### 1-3-2-3 Output Operation (an example of the second communication)

When the connection state of the information processing devices 1, 2 is wrong, as shown in FIG. 4, the image data or the like (the data in the predetermined format) of the input device 10 is not transmitted from the information processing device 1. That is, an output operation is not performed.

### 1-4 Modifications of First Embodiment

### 1-4-1 Modification 1

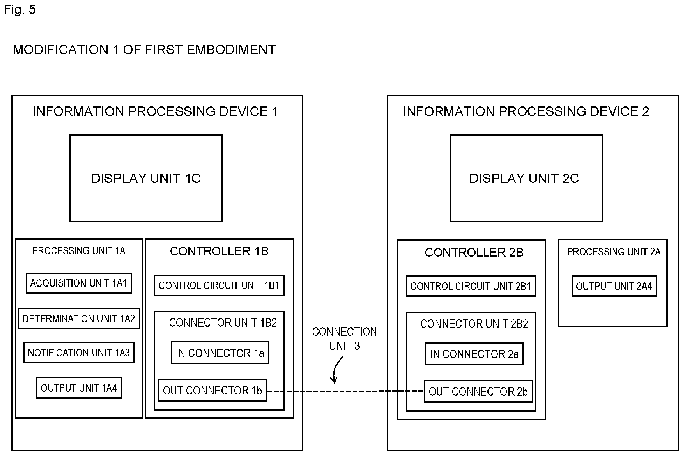

While, in the first embodiment, the information processing devices 1, 2 have the same configuration, this is not limiting. For example, the processing unit 2A of an information processing device 2 may be that without a port data determination function or the like as shown in FIG. 5. That is, the processing unit 2A of the information processing device 2 may be that without the acquisition unit 2A1, determination unit 2A2, or notification unit 2A3 shown in FIG. 2.

In the case of the modification 1, when a determination that allows the OUT connector 1b to function as a receiving connector is made, an information processing device 1 acquires the port data of the information processing device 2. Thus, even if a determination that allows an OUT connector 1b to function as a receiving connector is made, a determination unit 1A2 is able to determine the connection state.

### 1-4-2 Modification 2

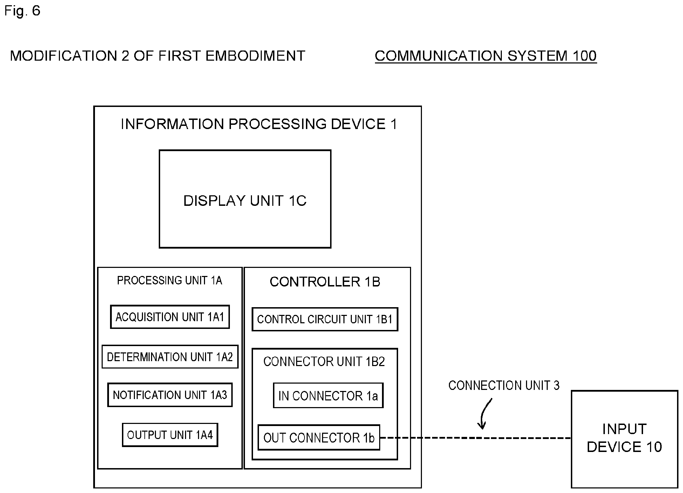

While the first embodiment has a configuration in which the display connected to the input device 10 and the other display are connected, this is not limiting. As shown in FIG. 6, a communication system 100 may have a configuration in which an input device 10 and an information processing device 1, which is a display, are connected through a connection unit 3.

In the case of the modification 2, when a determination that allows an OUT connector 1b to function as a receiving connector is made, the information processing device 1 acquires the port data of the input device 10. Note that the input device 10 is a personal computer and therefore the port data of the input device 10 specifies a transmitting port.

### 2. Second Embodiment

While the first embodiment has a configuration in which when it is determined that the connection is wrong, a notification is made using emission of a voice or display of a message, a second embodiment has a configuration in which a notification is not made but rather the functions themselves of connectors are switched.

A communication system 100 according to the second embodiment includes an information processing device 1, an information processing device 2, and an additional information processing device 1. Note that the processing units 1A of the information processing devices 1 do not have a port data determination function or the like. Specifically, the processing units 1A of the information processing devices 1 do not include the acquisition unit, determination unit, or notification unit shown in FIG. 2. In the communication system 100, one of the information processing devices 1 and the information processing device 2 is an example of the first information processing device, and the other is an example of the second information processing device. Also, the information processing devices 1 are an example of the external device.

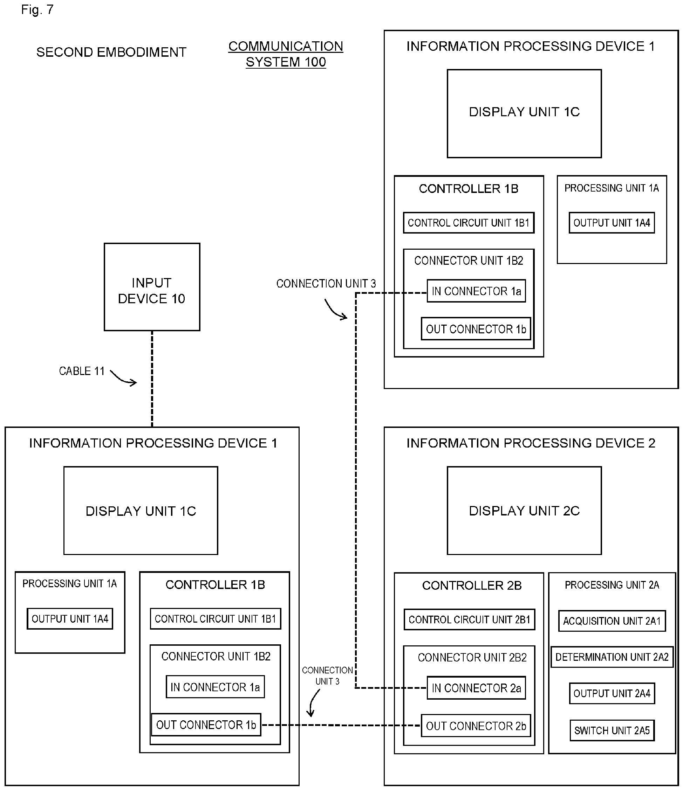

As shown in FIG. 7, the processing unit 2A of the information processing device 2 includes a switch unit 2A5 in place of a notification unit 2A3.

When a determination unit 2A2 determines that the connection is wrong, the switch unit 2A5 switches between the functions of connectors. In an example configuration shown in FIG. 7, data in a predetermined format of the input device 10 is sequentially transmitted from the input device 10 to the information processing device 1, information processing device 2, and information processing device 1. In this example, the connection state of the connector unit 2B2 of the information processing device 2 is wrong. In the case of correct connection, a connection unit 3 connected to the upstream-side information processing device 1 is connected to an IN connector 2a, and a connection unit 3 connected to the downstream-side information processing device 1 is connected to an OUT connector 2b. However, in FIG. 7, the two connection units 3 are connected to the connector unit 2B2 in an opposite manner and therefore the connection state of the information processing device 2 to the connection units 3 is wrong.

For this reason, the determination unit 2A2 determines that the connection between the information processing device 2 and the upstream-side information processing devices 1 is wrong, on the basis of the port data of the information processing device 2 and the port data of the upstream-side information processing device 1, as well as determines that the connection between the information processing device 2 and the downstream-side information processing devices 1 is wrong, on the basis of the port data of the information processing device 2 and the port data of the downstream-side information processing device 1. In the second embodiment, when the determination unit 2A2 makes the determinations that the connection is wrong, as described above, the switch unit 2A5 allows the OUT connector 2b to function as an IN connector and allows the IN connector 2a to function as an OUT connector.

That is, the information processing device 2 according to the second embodiment is able to use the OUT connector 2b as an IN connector serving as a receiving port, which is opposite to a transmitting port, although the port data of the information processing device 2 specifies the OUT connector 2b as a transmitting port. Thus, the data in the predetermined format is properly outputted from the upstream-side information processing device 1 to the OUT connector 2b in an output operation. That is, the communication system 100 is able to avoid impairment of the convenience thereof.

Similarly, the information processing device 2 according to the second embodiment is able to use the IN connector 2a as an OUT connector serving as a transmitting port, which is an port opposite to a receiving port, although the port data of the information processing device 2 specifies the IN connector 2a as a receiving port. Thus, the data in the predetermined format is properly outputted from the information processing device 2 to the downstream-side information processing device 1 in the output operation. That is, the communication system 100 is able to avoid impairment of the convenience thereof.

While the communication system 100 according to the second embodiment includes the one input device 10 and three information processing devices (information processing devices 1, 2), this is not limiting and various changes can be made. For example, the communication system 100 may include one input device 10 and two information processing devices (the upstream-side information processing device 1 and information processing device 2 in FIG. 7), or may include one input device 10 and one information processing device (information processing device 2) connected to the input device 10.

### Reference Signs List

1: information processing device
1A: processing unit
1A1: acquisition unit
1A2: determination unit
1A3: notification unit
1A4: output unit
1B: controller
1B1: control circuit unit
1B2: connector unit
1C: display unit
1a: IN connector
1b: OUT connector
2: information processing device
2A: processing unit
2A1: acquisition unit
2A2: determination unit
2A3: notification unit
2A4: output unit
2B: controller
2B1: control circuit unit
2B2: connector unit
2C: display unit
2a: IN connector
2b: OUT connector
3: connection unit
3A: cable
3B: connector unit
3B1: connector
3B2: plug unit
3B3: control circuit
10: input device
11: cable
100: communication system

## Claims

1. A communication system comprising first and second information processing devices,
wherein the first information processing device comprises a first connector unit and a first control unit,
wherein the second information processing device comprises a second connector unit and a second control unit,
wherein the first and second connector units are configured to be able to connect the first and second control units so that the first and second control units communicate with each other,
wherein the first and second control units are configured to be able to perform first communication and second communication and each contain port data,
wherein the port data is data specifying either a receiving port or a transmitting port,
wherein the receiving port is a port that receives data in a predetermined format in the second communication,
wherein the transmitting port is a port that transmits the data in the predetermined format in the second communication,
wherein one of the first and second control units acquires the port data of the other of the first and second control units in the first communication,
wherein the second communication is performed after the first communication, and the data in the predetermined format is transmitted and received between the first and second connector units in the second communication, and
wherein the one of the first and second control units is configured to determine whether the port data of the one control unit is different from the acquired port data of the other control unit.

2. The communication system of claim 1, wherein the one of the first and second control units is configured to, when the one control unit determines that the port data of the one control unit is identical to the acquired port data of the other control unit, make a notification that connection is wrong.

3. The communication system of claim 2, wherein the information processing device corresponding to the one of the first and second control units is a display comprising a display unit.

4. The communication system of any one of claims 1 to 3, wherein in the first communication, the one of the first and second control units acquires the port data of the other of the first and second control units using a vendor-defined message (VDM).

5. The communication system of any one of claims 1 to 4,
wherein the first and second control units are configured to perform an initial state determination operation on the basis of a voltage between the first and second connector units,
wherein the initial state determination operation is performed before the first communication, and a determination that allows one of the first and second information processing devices to function as a source and allows the other information processing device to function as a sink is made in the initial state determination operation,
wherein the source corresponds to a device that supplies power, and
wherein the sink corresponds to a device that receives supply of power.

6. The communication system of claim 5,
wherein at least one of the first and second information processing devices is configured to be switchable between the source and the sink, and
wherein when the first and second connector units are connected and the amount of change in the voltage between the first and second connector units is smaller than a predetermined threshold, the one of the first and second information processing devices is switched from the source to the sink or from the sink to the source.

7. An information processing method for determining whether connection between first and second information processing devices is wrong, the method comprising:
an acquisition step; and
a determination step,
wherein the first information processing device comprises a first connector unit and a first control unit,
wherein the second information processing device comprises a second connector unit and a second control unit,
wherein the first and second connector units are configured to be able to connect the first and second control units so that the first and second control units communicate with each other,
wherein the first and second control units are configured to be able to perform first communication and second communication and each contain port data,
wherein the port data is data specifying either a receiving port or a transmitting port,
wherein the receiving port is a port that receives data in a predetermined format in the second communication,
wherein the transmitting port is a port that transmits the data in the predetermined format in the second communication,
wherein in the first communication, one of the first and second control units acquires the port data of the other of the first and second control units,
wherein the second communication is performed after the first communication, and the data in the predetermined format is transmitted and received between the first and second connector units in the second communication,
wherein in the acquisition step, the one of the first and second control units acquires the port data of the other of the first and second control units by performing the first communication, and
wherein in the determination step, the one of the first and second control units determines whether the port data of the one control unit is different from the acquired port data of the other control unit.

8. A computer program for performing the information processing method of claim 7.

9. An information processing device comprising a connector unit and a control unit,
wherein the connector unit is configured to be connectable to an external connector unit of an external device independent of the information processing device,
wherein the control unit is able to communicate with an external control unit of the external device through the connector unit and is configured to be able to perform first communication and second communication,
wherein the control unit and the external control unit each contain port data related to the connector unit or the external connector unit,
wherein the port data is data specifying either a receiving port or a transmitting port, wherein the receiving port is a port that receives data in a predetermined format in the second communication,
wherein the transmitting port is a port that transmits the data in the predetermined format in the second communication,
wherein in the first communication, the control unit acquires the port data of the external control unit,
wherein the second communication is performed after the first communication, and the data in the predetermined format is transmitted and received between the connector unit and the external connector unit in the second communication, and
wherein the control unit is configured to determine whether the port data of the control unit is different from the acquired port data of the external control unit.

10. The information processing device of claim 9,
wherein when the control unit determines that the port data of the control unit is identical to the acquired port data of the external control unit, in the first communication, the connector unit of the control unit operates to become a function corresponding to the port opposite to the port specified by the port data of the external control unit.
